# EUROPEAN PATENT APPLICATION

(11) **EP 3 552 487 A1**
(43) Date of publication of application: **16.10.2019**
(21) Application number: 19163592.9
(22) Date of filing: 19.03.2019
(51) Int. Cl.: A01K 29/00, A01K 13/00

(54) **METHOD OF AND SYSTEM FOR MANAGING A HERD OF FREE-WALKING DAIRY ANIMALS**

(30) Priority: 12.04.2018 NL 2020754
(71) Applicant: Lely Patent N.V., 3147 PB Maassluis (NL)
(72) Inventor: SONG, Xiangyu, 3147 PB Maassluis (NL); VAN OOSTSTROOM-BRUMMEL, Friso, 3147 PB Maassluis (NL)
(74) Representative: Octrooibureau Van der Lely N.V.

(57) **Abstract**

There is provided a method of managing a herd of free-walking dairy animals, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing. The method comprises the steps of a) automatically determining for each animal the daily amount of time spent on activities of the second category, and b) giving a notification to a farmer if a criterion relating to said determined amount is fulfilled, such as a too large decrease. There is also provided a system for carrying out the method.

## Description

The present invention relates to a method of and system for managing a herd of free-walking dairy animals.

In a first aspect, the invention relates to a method of managing a herd of free-walking dairy animals, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing.

Herein, activities of the first category are, as indicated, necessary for the dairy animals to survive or to function as a dairy animal. These activities relate to biological, physical activities without which the animal would die or would stop functioning as a dairy animal within a short time. Clear examples are eating and drinking but also milking of the animal, since (suddenly) stopping milking would lead to the inhibition of milk production, i.e. to no longer functioning as a dairy animal. Activities of the second category relate to activities that the animals may engage in without this being necessary for survival or for functioning as a dairy animal. Examples are playing and grooming. Although these activities may form a part of the animals' every day behaviour, they are not necessary to survive or to be milked. In this respect, it is to be noted that the animals should be free-walking, since for example tied-up animals can hardly interact physically, or go to places to engage in such secondary activities.

It is an object of the invention to improve management of the dairy animals by automatically extracting information from the behaviour of the dairy animals relating to their activities.

The invention achieves this object by means of a method according to claim 1, in particular, a method of managing a herd of free-walking dairy animals, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing, the method comprising the steps of a) - automatically determining for at least one, and preferably each, animal the daily amount of time spent on activities of the second category, and b) - giving a notification to a farmer if a predetermined criterion relating to said determined amount is fulfilled.

It was found and realised by the inventors that the activities of the second category are characterised by a low resilience, they are more or less "luxury" activities. If time or energy resources become limited to a dairy animal, such as during conditions of stress, discomfort or illness, and therefore time and in particular energy lacking, these activities will be (much) less engaged in. Therefore, automatically monitoring and determining the (total) daily time spent on these activities of the second category can provide information about the well-being of the dairy animals. In addition, if said activity becomes painful or otherwise unattractive, then it is easy for the animal to skip this actvity, while that would not hold for activities of the first category. Again, for example a decrease in daily time spent on the second category activity may be an indication of some problem.

It is easily possible to collect the information non-invasively and often even non-intrusively. Based on this information, in particular if a predetermined criterion is met, there may then be given a notification to a farmer to trigger actions by him, a veterinarian and so on. The notification may be a text message, an audible or visible alarm, an entry in a daily listing and so on. In this way an additional useful tool is provided to help improve the animals' well-being, or at least prevent that a lack thereof goes by unnoticed.

It is remarked that document EP2830415A1 discloses to monitor the grooming behaviour of cows at a cow brush, and generate an alarm if the animal visits the brush with a deviating frequency, or a different average length. However, this document neither relates to the background of the two categories of behaviours, including the "luxury" behaviours, nor does it mention total amount of time, which in some cases is a more important parameter. After all, if an animal is chased from the brush by a higher-ranking animal, or is lured away by the sound of fresh feed being supplied at the feed fence, and if the animal subsequently returns to "finish" its grooming, the total time spent at grooming may remain the same, thus not giving rise to an alarm. Contrarily, since the visiting frequency increases and the average time per grooming visit decreases, this situation does give rise to an alarm in the context of the known system and method. Thus, it is clear that the cited document and the present invention may give rise to different outcomes for the same animal, and thus work in different ways.

Advantageous or otherwise particular embodiments of the present invention are described in the dependent claims, as well as in the following description.

In embodiments, step a) comprises providing a location designated for engaging in an activity of the second category, and determining the daily amount of time spent on said activity in said location. By providing a location designated for engaging in an activity of the second category, it is easier to automate the monitoring and determining the total time spent on said activity (/activities) than when the animals could engage in said activities anywhere. Herein it is assumed that said activity will be engaged in sufficiently to provide meaning to its monitoring and determination. In particular, step a) is said providing and determining, in other words no other second category activities are taken into account.

In particular, the method comprises providing as said location a location with an animal brush device for brushing the dairy animals, and determining the daily amount of time spent on using the brush device. Grooming the skin by using a brush device is a clearly recognisable activity, that was also found to be clearly an activity of the second category. In cases of a lack of well-being, the time spent brushing clearly decreased.

In embodiments, the criterion comprises that the total daily amount is at most equal to a predetermined time alarm threshold. In case the total daily amount of time equals or even falls below said time alarm threshold, a notification is given tha tcould lead to immediate action. The predetermined time alarm threshold could for example have a value of zero. Herein it is assumed that not using the brush device at all is a clear indication that the corresponding animal's well-being may be at risk, requiring swift action, such as at least a quick check by the farmer. The predetermined time alarm threshold may however be chosen to have a higher value, such as determined by the farmer of the herd based on his/her experience, for example 2 minutes/day.

In embodiments, the method comprises the step of determining an average value of the total daily amount of time over the previous A days, wherein A is a predetermined number ≥ 1, and wherein the criterion comprises that a difference between the momentary total daily amount and said average average value is a decrease that exceeds a predetermined absolute or relative decrease alarm threshold. This may take into account that behaviour may change slowly, so that e.g. falling below an absolute threshold value may become less meaningfull while a sudden (further) drop with respect to a slowly falling average value proves more meaningful. Herein, "momentary" relates to the last completed day (that may run from any time of the day to 24 hrs later), while "previous" relates to "before the momentary day".

It is furthermore remarked that the criterion comprising the difference being a decrease that exceeds a relative decrease alarm threshold seems the most important, in that it allows to base an alrm on anything that causes a marked relative difference in the behaviour of the animal. For example, adding a new animal to the herd might cause a drop in luxury behaviour of one of the "old" animals, because of bullying of the "old" animal by the "new" animal. And if the old animal is an animal that groomed only briefly every day, the absolute decrease might not be large, while the relative amount would be. Similarly, a high-ranking "old" animal that grooms a lot might at the same time be curious to find out about the new animal, spending a lot of time with her, even trying to establish her superiority over the new animal. This leads away from grooming for a large amount of time (at least in an absolute sense), while the relative decrease might be small, which is in this case more relevant.

In embodiments, the method comprises the steps of determining a first average value of the total daily amount of time over the previous B days, and determining a second average value of the momentary total daily amount of time and the total daily amount of time over the previous C days, wherein B and C are predetermined numbers with B > C ≥ 1, wherein the criterion comprises that a difference of said second average value and said first average value is a decrease that exceeds a predetermined absolute or relative average decrease alarm threshold. Herein, account is taken of the circumstance that there may be special reasons why one or more animals do not engage in the activity or activities of the second category. For example if one or more new animals are added to the herd, or if there are one or more other disturbing events early in the day, such as a dog or other animal, or one or more children entering the stall, the animals may have become too restless or too distracted to engage in the second category activity/-ies. But this situation will almost always no longer be present the next day. By determining an average value over more than one day and including the momentary day, such less meaningful spikes or outliers may be smoothed, so that false positive alarm notifications may be suppressed. Of course, the same principle is then applied also for the average value to be compared with, in this case the average value of the C days previous to the momentary day. Note that it suffices to use the two previous days for the first average value, and to use the momentary day and the day before, i.e. one previous day, for the second average value. Using more days will provide smoother behaviour of the values.

However, note that methods according to these embodiments will take more time for an alarm notification to be generated. Therefore, it may be advantageous if the criterion combines two or more of such "sub"criteria, e.g. notify if the average falls below a value or decreases with a certain amount or percentage, but also or only notify if the daily value is below a (lower) threshold value, or the like. Note also that in this respect "average" may be an arithmetic average, a rolling average, a weighted average, and so on.

In a second aspect, the invention relates to a system for managing a herd of free-walking dairy animals arranged to perform a method according to the first aspect of the invention, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing, the system comprising at least one location designated for engaging in an activity of the second category.

For this second aspect, the object is to provide a system that enables to perform a method according to the first aspect of the invention, and/or to enable or improve management of the animals.

Thereto, the invention provides a system for managing a herd of dairy animals, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing, the system comprising at least one location designated for engaging in an activity of the second category, an animal ID device arranged to identify the animal when engaging in said activity at said location, a control unit arranged to determine a total daily amount of time of said engaging in said activities of the second category for at least one of said dairy animals, wherein the control unit is further arranged to determine automatically for at least one, and preferably each, animal the total daily amount of time spent on activities of the second category, and to give a notification to a farmer if a predetermined criterion relating to said determined amount is fulfilled. By means of such a system, it is possible to monitor the behaviour of the dairy animals, and to be notified automatically in case the control unit determines that there is a certain change therein. Most, if not all, of the advantages mentioned for the method are also applicable to the system according to this aspect of the present invention. This holds for the specific methods as well, in each case the control unit being arranged to perform the respective additional features.

Note that, since amounts of time are determined, it is implicit that the control unit comprises, or is operably connected to, a clock device. For example, it is possible to determine the amount of time by determining how long an animal stays at or in the location designated for engaging in an activity of the second category. It is e.g. known that the residence time of a dairy animal in a milking box or in a feeding box can be determined. It could suffice to determine when an animal enters said box, either by means of a proximity or presence sensor, a photoelectric cell or the like, and to use the animal ID device to determine the animal's identity. As long as the proximity sensor, the presence sensor &c. indicates that the identified animal is present, and no new animal identity is established, the animal is present in the box. So if, according to the present invention, a similar location, such as a box or otherwise well-delimited area, is provided in which the animal is able to engage in an activity of the second category, and preferably none of the first category, it can safely be assumed that the time spent by the animal in said location is allocated for the second category activity, and that time may be added to the daily amount of time spent thus far.

In the present invention, the total daily amount of time is determined and/or used. Note, however, that it is not strictly necessary to use a time period starting at 00:00 and running till the next 00:00 hours. The period could run for 24 hours from a different starting point. It is also possible to use periods longer than a day, such as two consecutive days, or a week. It is then possible, though not necessary, to derive therefrom the amount of time for one-day periods. In other words "daily" is to be taken as "during a predetermined and fixed period of time of at least one day". Although in such cases the alarm may be given somewhat later than for one-day periods, the chance of a false positive alarm will be smaller. Yet, taking a period of exactly one day is not only very easy, it also takes into account the daily rhythm of the animals, and seems an optimum compromise of early but reliable alarms.

As an example of the predetermined criterion, the criterion is such that said amount is lower than a predetermined threshold or that said amount has decreased more than an absolute or relative amount with respect to a total daily amount for that animal during the previous day or averaged over the past A number of days, with A ≥ 1. The control unit is then arranged to apply this criterion to the determined data.

In embodiments the control unit comprises an animal locator system that is operably connected to the animal ID device and that is arranged to determine said engaging in said activity as the time during which said dairy animal is present in said at least one location. Such an animal locator system uses e.g. long distance RFID chips worn by the animals, and one or more beacons or antennas to determine respective positions of the animals. This embodiment is helpful if there are various locations for engaging in a second category activity, by avoiding the need for animal ID systems at all those locations.

In particular embodiments, said at least one location comprises, and in particular is, a brushing location with an animal brush device, such as a cow brush, and the activity of the second category is using the brush device. A brush, such as the Lely Luna® cow brush, is a clear example of a device used (only) for activities of the second category, here grooming of the skin or perhaps pure relaxation.

In particular embodiments, the animal brush device comprises the animal ID device that is arranged to determine the identity of the animal at the brush device, and to provide to the control unit the determined animal identity. This uses the set-up as described above for milk boxes, and thus simplifies the collecting of time data.

In advantageous embodiments, the animal brush device is provided with a motor for driving the animal brush device, and the control unit is operably connected to the animal brush device and is arranged to determine said total daily time based on the length of time that the motor drives the animal brush device until either the animal locator system or the animal ID device determines a new animal identity at the brush device. This is a very precise set-up and way to determine the total time spent on brushing per animal, in which there is accounted for time for loitering as well as for the time spent near the brush as a mere coincidence, i.e. without the intent to engage in the corresponding activity proper.

The invention will now be explained further by means of one or more examples as shown in the drawing and described below, which are not deemed to be limiting to the invention in any way. The drawing shows in:
Figure 1 a diagrammatic view of a system according to the invention; and
Figure 2 a diagram with time measurements for use in a method according to the invention.

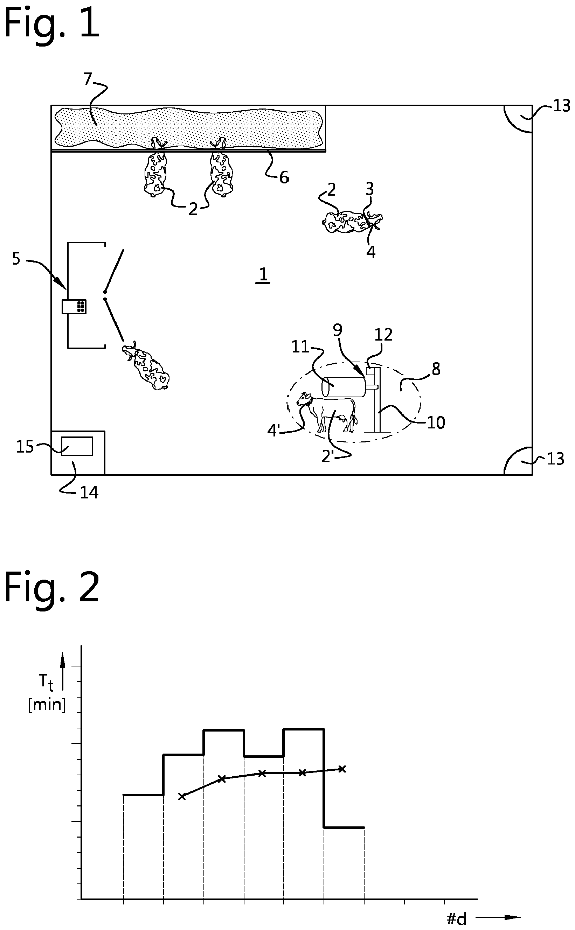

Figure 1 show a diagrammatic view of a system according to the invention. In a stable 1 there are dairy animals 2, 2' such as cows, each having a belt 3 around the neck, with an ID tag 4, 4' attached to the belt. Furthermore there is provided a milking robot 5, where the dairy animals are milked, and a feed fence 6, where the animals can eat feed 7.

In an area designated 8 there is provided an animal brush device 9, with a frame 10 on which a brush 11 is provided, as well as an animal ID device 12.

Locator antennae 13 are provided in two corners of the stable. A control unit 14 has a display 15.

In the stable 1 for the dairy animals 2, 2', there are provided a number of features for activities that are necessary for a dairy animal, either to survive or to function as a dairy animal. First of all, such activities are e.g feeding and drinking. Therefore, a feed fence 6 is provided, that provide access to feed 7. More features are normally provided, such a a drinking trough and a concentrate feeder in e.g. the milking robot 5, but are not shown in any further detail here. In addition to feeding and drinking, a dairy animal must be milked. Thereto, a milking robot 5 is provided, although other milking devices, such as a carrousel milker or conventional milk boxes could also be provided. Note that it is possible to not milk a dairy animal, although that would lead to a painful period of high udder pressure before the milk produced is resorbed again, after which milk production stops until the next calving. But the dairy animal then stops functioning as a dairy animal. Hence, milking is considered an activity of the first category in this respect. Additional features such as cubicles for ruminating, resting and sleeping will also be provided, but are neither given in further detail here.

In the stable 1 there is also provided an area 8, that is designated for an activity of a second category, a "luxury" category, that are not strictly necessary for survival or functioning as a dairy animal, but that are pleasant for the animal. Monitoring the time spent on such activities is an indication of well-being of the animals.

Here, the area 8 has a brushing device 9. The brushing device 9 has a frame 10, to which is mounted a brush 11 for brushing the skin of (in this case) the cow 2'. The brush may be mounted fixedly, resiliently or swivellingly, and vertically, horizontally or slanting. The brush may furthermore be rotatable by a motor (not shown here). The cow 2' present in the area 8, i.e. at the brushing device 9, is identified by means of the ID tag 4' transmitting the cow's ID to the animal ID device 12. Alternatively or additionally, the presence could also be detected by means of the beacon antennae 13, arranged to pick up a signal from the (suitably arranged) ID tag 4' and then to determine the position of the identified cow 2' by triangulation or the like.

The time during which the animal ID device 9 determines that cow 2' is present in the area 8 is taken to be the time that the cow is engaged in brushing, i.e. an activity of the second category. This time information is collected by the control unit 14 that is operably connected to the animal ID device 12. This information is collected over time, and processed by the control unit 14, which will be explained further in connection with Figure 2.

It is possible to control the (optional) motor for the brush 11 by means of the animal ID device 12, and/or by means of a sensor (not shown) in the brush device 9, that starts and stops the motor of the brush based on whether or not the cow 2' contacts the brush 11. This enables to tell more precisely whether the cow 2' actually uses the brush device 9 or whether the cow 2' is only present in area 8 without the intention to be brushed. This helps to improve the data collection by limiting the amount of time spent on brushing to the length of time that the respective animal is actually and intentionally brushed.

Figure 2 shows a possible diagram of data collected for cow 2' on a number of consecutive days. On the y axis is the total daily amount of time spent on brushing in minutes, while the (arbitrary) day number is on the x axis. The bars represent the respective daily amounts, while the crosses connected by line segments represent the average of the amounts of all the previous days, i.e. not including the present day.

To determine a value, the duration of all periods spent on engaging in brushing during a day is summed by the control unit 14. This was done for, in this case, 6 consecutive days. Furthermore, the average value has been calculated by the control unit, and depicted in the graph. Of course, for the first day no such average could be calculated.

One can see that during the first five days the daily amount of time varies between about 7 and about 12 minutes. However, during the sixth day only 4 minutes were spent. This is less than half the average up to then. Depending on the criterion set in the control unit 14, this event may lead to a notification. Assume for the moment that the criterion is "Is the momentary total daily amount less than 50% of the average value of the previous days?" In that case, the criterion is fulfilled on the sixth day, and the control unit 14 generates and issues a notification, such as by displaying same on the display 15 of Figure 1. This notification may lead the farmer to checking whether something serious has happened to the cow 2'. Likewise, as long as no such notification is received by the farmer, he can assume that the cow's wellbeing is at a satisfactory level.

Note that the way of processing the data, as well as the applied criterion/criteria may vary, as already described in the introductory part. This may help to prevent meaningless outliers or too many false-positive notifications because values vary to wildly. For example, it is also possible to have a criterion that is fulfilled if the absolute value of the total daily amount drops beneath an absolute value, such as beneath 5 minutes. Also the average value of the momentary day and the previous day may be averaged, and then compared to the average of, say, the five days before the previous days, the criterion then being for example that the former value is at least 70% of the latter value, and so on, and so on.

The above described embodiments only serve to help explain the invention without limiting this in any way. The scope of the invention is rather determined by the appended claims.

## Claims

1. Method of managing a herd of free-walking dairy animals,
wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing,
the method comprising the steps of
a) - automatically determining for at least one, and preferably each, animal the daily amount of time spent on activities of the second category, and
b) - giving a notification to a farmer if a predetermined criterion relating to said determined amount is fulfilled.

2. Method according to claim 1, wherein step a) comprises, and in particular is, providing a location designated for engaging in an activity of the second category, and determining the daily amount of time spent on said activity in said location.

3. Method according to any preceding claim, comprising providing as said location a location with an animal brush device for brushing the dairy animals, and determining the daily amount of time spent on using the brush device.

4. Method according to any preceding claim, wherein the criterion comprises that the daily total amount is at most equal to a predetermined time alarm threshold.

5. Method according to any preceding claim, comprising the step of determining an average value of the total daily amount of time over the previous A days, wherein A is a predetermined number ≥ 1, and wherein the criterion comprises that a difference between the momentary total daily amount and said average average value is a decrease that exceeds a predetermined absolute or relative decrease alarm threshold.

6. Method according to any preceding claim, comprising the steps of determining a first average value of the total daily amount of time over the previous B days, and determining a second average value of the momentary total daily amount of time and the total daily amount of time over the previous C days, wherein B and C are predetermined numbers with B ≥ C ≥ 1, wherein the criterion comprises that a difference between said second average value and said first average value is a decrease that exceeds a predetermined absolute or relative average decrease alarm threshold.

7. System for managing a herd of free-walking dairy animals arranged to perform a method of any of claims 1-6, wherein the dairy animals are able to engage in daily activities of a first category that are necessary to survive or function as a dairy animal, such as eating, drinking, and being milked, as well as in daily activities of a second category that are not necessary to survive or function as a dairy animal, such as brushing, the system comprising
- at least one location designated for engaging in an activity of the second category,
- an animal ID device arranged to identify the animal when engaging in said activity at said location,
- a control unit arranged to determine a total daily amount of time of said engaging in said activities of the second category for at least one of said dairy animals,
wherein the control unit is further arranged to determine automatically for at least one, and preferably each, animal the total daily amount of time spent on activities of the second category, and to give a notification to a farmer if a predetermined criterion relating to said determined amount is fulfilled, in particular that said amount is lower than a predetermined threshold or that said amount has decreased more than an absolute or relative amount with respect to a total daily amount for that animal during the previous day or averaged over the past A number of days, with A ≥ 1.

8. System according to claim 7, wherein the control unit comprises an animal locator system that is operably connected to the animal ID device and that is arranged to determine said engaging in said activity as the time during which said dairy animal is present in said at least one location.

9. System according to any of claims 7-8, wherein said at least one location comprises, and in particular is, a brushing location with an animal brush device, such as a cow brush, and wherein the activity of the second category is using the brush device.

10. System according to claim 7-9, wherein the animal brush device comprises the animal ID device that is arranged to determine the identity of the animal at the brush device, and to provide to the control unit the determined animal identity.

11. System according to claim 9 or 10, wherein the animal brush device is provided with a motor for driving the animal brush device, and wherein the control unit is operably connected to the animal brush device and is arranged to determine said total daily time based on the length of time that the motor drives the animal brush device until either the animal locator system or the animal ID device determines a new animal identity at the brush device.
